# EUROPEAN PATENT APPLICATION

(11) **EP 2 039 933 A1**
(43) Date of publication of application: **25.03.2009**
(21) Application number: 07767598.1
(22) Date of filing: 26.06.2007
(51) Int. Cl.: F04B 39/00, H02K 5/22, H02K 7/14

(54) **ELECTRIC COMPRESSOR**

(30) Priority: 12.07.2006 JP 2006191564
(71) Applicant: Sanden Corporation, Isesaki-shi, Gunma 372-8502 (JP)
(72) Inventor: OSAKA, Masahiko, Isesaki-shi Gunma 372-8502 (JP); TAGUCHI, Masanori, Isesaki-shi Gunma 372-8502 (JP); SAITO, Satoru, Isesaki-shi Gunma 372-8502 (JP); OSHIO, Eiichi, Isesaki-shi Gunma 372-8502 (JP); KAMEYAMA, Kazuhiko, Isesaki-shi Gunma 372-8502 (JP); TSUKAMOTO, Kou, Isesaki-shi Gunma 372-8502 (JP)
(74) Representative: Feldmeier, Jürgen
(86) International application number: PCT/JP2007/062792
(87) International publication number: WO 2008/007542

(57) **Abstract**

An energization bolt (102), which includes an input portion (102a) to be connected to a motor (40), an intermediate portion (102b) contiguous to the input portion and positioned in an insertion hole (23d) formed in a housing (20), and an output portion (102c) contiguous to the intermediate portion and to be connected to a drive circuit (98), and energizes between the drive circuit and the motor, and a seal member (100), which surrounds the intermediate portion, is sandwiched and supported by the input portion side and the output portion side, and is fastened to the housing, are included.

## Description

### TECHNICAL FIELD

The present invention relates to a motor-driven compressor, and, particularly, to a motor-driven compressor suitable to be incorporated in a refrigeration circuit or the like of the air conditioning system of a vehicle.

### BACKGROUND ART

This kind of compressor comprises a drive part and compression part which are accommodated in a housing, and this compression part is provided with a compressing unit which performs a series of processes of suction, compression and discharge of a refrigerant.

For example, a compressing unit of a scroll type compressor comprises a fixed scroll and a movable scroll which engage with each other, and as the movable scroll makes a revolving motion with respect to a fixed scroll, the volume of the space formed by the individual scrolls decreases, and the aforementioned series of processes is carried out. This unit is driven with the rotary shaft, which is driven by energization of a motor. The rotary shaft and motor are provided at the drive part, and the terminals of the motor are electrically connected to the terminals of a drive circuit disposed outside the compressor via lead wires.

Here, there is disclosed a technique of directly fastening the terminals of the motor and the drive circuit by bolts to enable energization, and eliminating the lead wires therebetween to reduce electric heat loss (see Japanese Unexamined Patent Publication No. 2002-371983).

By the way, an insulating measure becomes essential to supply power to the motor. For this reason, it is desirable to secure the insulation distance to improve the insulation performance and reduce portions from which current may leak, as many as possible. In the conventional technique, however, a plurality of energization bolts are exposed to a refrigerant or oil atmosphere, which is not preferable to improve the insulation performance.

In addition, to prevent leakage of the refrigerant or oil atmosphere from the housing, each energization bolt should be placed in a sealed terminal sealed. However, the conventional technique needs a fixing part for the sealed terminal to the housing because of the relationship of the individual energization bolts spaced apart from one another, those portions and area which require sealing increase, thus enlarging the sealed terminal structure and increasing the number of parts, which makes the assembly work troublesome.

### DISCLOSURE OF THE INVENTION

The present invention has been made in view of such problems, and it is an object of the invention to provide a motor-driven compressor which significantly improves the insulation performance, is compact and has fewer parts, and has sealed terminals which can be sealed surely.

To achieve the object, a motor-driven compressor according to the present invention comprises a housing which is a sealed container, a machine chamber formed in the housing, and provided with a motor whose rotary shaft rotatably supported is driven by power supply from an external drive circuit, a compressing unit which is accommodated in the housing, and is driven by the rotary shaft to perform a series of processes of suction, compression and discharge of a refrigerant, an energization bolt which includes an input portion to be connected to the motor, an intermediate portion contiguous to the input portion and positioned in an insertion hole formed in the housing, and an output portion contiguous to the intermediate portion and to be connected to the drive circuit, and energizes between the drive circuit and the motor, and a seal member which surrounds the intermediate portion, is sandwiched and supported by the input portion side and the output portion side, and is fastened to the housing.

According to the foregoing motor-driven compressor, the energization bolt is inserted in the insertion hole of the housing, and the seal member is fastened to the housing only by the energization bolt. Therefore, the energization bolt serves both to feed power to the motor from the drive circuit and fix the seal member, thereby making it unnecessary to separately provide a drive casing with a fixing portion for the seal member. It is therefore possible to reduce the number of parts of the motor-driven compressor and facilitate the assembly work. In addition, the internal space of the housing can be reduced, making it possible to promote miniaturization of the motor-driven compressor.

As a preferable mode, in the motor-driven compressor, the seal member includes an inner block which abuts on an inner end face of the housing, extends toward inside the housing and has an insulation property, and an outer block which abuts on an outer end face of the housing, extends toward outside the housing and has an insulation property, each of the blocks having a through hole formed therein to permit insertion of the energization bolt.

According to this configuration, the energization bolt and the inside and outside of the housing can surely be insulated, making it possible to improve the insulation performance of the motor-driven compressor.

As a preferable mode, in the motor-driven compressor, the seal member further includes an intermediate block with an insulation property, which is surrounded by the inner block and the outer block, is positioned between the insertion hole and the intermediate portion, and has a through hole formed therein to permit insertion of the energization bolt.

According to this configuration, the energization bolt and the insertion hole of the housing can surely be insulated, making it possible to further improve the insulation performance of the motor-driven compressor.

As a preferable mode, in the motor-driven compressor, an elastic member which seals the through hole and inside the housing is disposed between the through hole of the inner block, and the intermediate portion.

According to this configuration, it is possible to prevent the refrigerant or oil atmosphere in the housing from leaking outside the housing through the through hole and the insertion hole in the axial direction of the energization bolt, making it possible to improve the sealing performance of the motor-driven compressor.

As a preferable mode, in the motor-driven compressor, an elastic member which seals the through hole and inside the housing is disposed between the inner block and the inner end face of the housing.

According to this configuration, it is possible to prevent the refrigerant or oil atmosphere in the housing from leaking outside the housing through the insertion hole in the radial direction of the energization bolt, making it possible to further improve the sealing performance of the motor-driven compressor.

As a preferable mode, in the motor-driven compressor, one or a plurality of energization bolts are provided for each phase of the motor, and in case of the plurality of energization bolts in total, the individual energization bolts are disposed adjacent to one another.

According to this configuration, reduction of the internal space of the housing can be promoted further, thus making it possible to promote further miniaturization of the motor-driven compressor.

### BRIEF DESCRIPTION OF THE DRAWINGS

Fig. 1 is a longitudinal cross-sectional view of a scroll type compressor according to one embodiment of the present invention,
Fig. 2 is a plan view of a seal member in Fig. 1.
Fig. 3 is an enlarged longitudinal cross-sectional view of the seal member in Fig. 1.
Fig. 4 is an enlarged longitudinal cross-sectional view of a seal member according to a modification of the invention in which only the positions and the number of O rings to be mounted to the seal member in Fig. 3 are changed.

### BEST MODE FOR CARRYING OUT THE INVENTION

One embodiment of the present invention will be described below referring to the drawings.

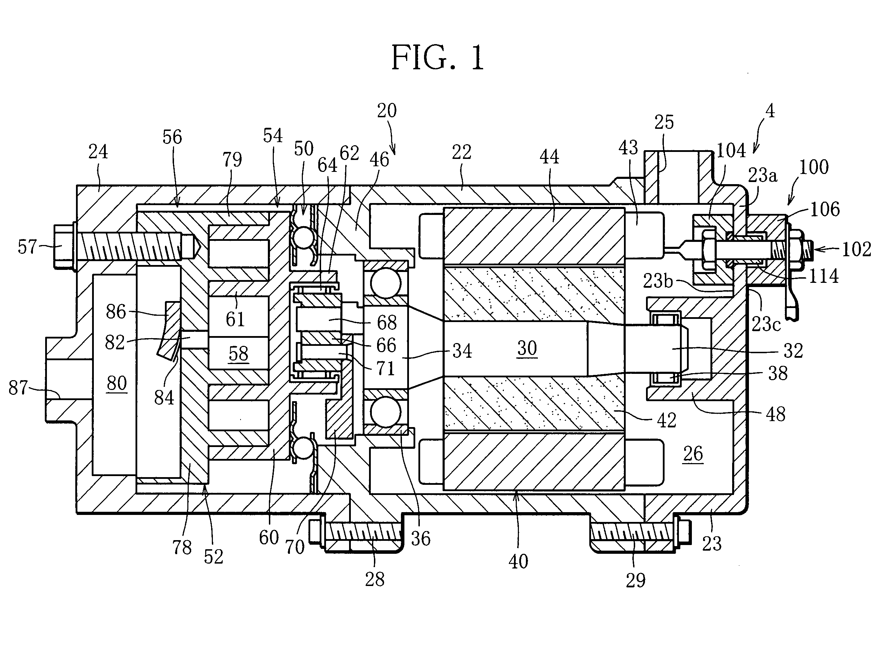

Fig. 1 shows a motor-driven compressor 4 according to the embodiment.

The motor-driven compressor 4 has a housing 20 extending horizontally, and is installed into the refrigeration circuit or the like of the air conditioning system of a vehicle for usage. In addition to the compressor 4, a gas cooler, an expansion valve, an evaporator, none shown, and so forth are arranged sequentially in such a refrigeration circuit, and the compressor 4 sucks a natural type refrigerant CO₂ refrigerant (simply called refrigerant hereafter) from the evaporator, compresses this refrigerant, and discharges the refrigerant toward the gas cooler.

The housing 20 is a sealed container which comprises a drive casing 22, a rear casing 23, and a compression casing 24. The drive casing 22 has both ends open while the compression casing 24 and the rear casing 23 have cup shapes open to the drive casing 22. The open ends of the compression casing 24 and the rear casing 23 are fitted airtightly in the open ends of both ends of the drive casing 22 via bolts 28 and 29. The drive casing 22 and the rear casing 23 may be formed integrally or the individual casings 22, 23, 24 may be formed integrally if at least one end side is open.

An annular support block 46 is provided at an open end of one end side of the drive casing 22. A motor chamber (machine chamber) 26 is formed in the space between the support block 46 and the cup-shaped bottomed portion of the rear casing 23 in the drive casing 22. A stepped rotary shaft 30 is disposed in the motor chamber 26, and the rotary shaft 30 has a small-diameter shaft part 32 and a large-diameter shaft part 34.
The small-diameter shaft part 32 is rotatably supported by a boss 48 which projects from the bottomed portion of the rear casing 23 via a needle bearing 38, while the large-diameter shaft part 34 is rotatably supported at the support block 46 via a ball bearing 36.

A suction inlet 25 which communicates with the motor chamber 26 is formed in the peripheral wall of the rear casing 23, and is connected to the aforementioned evaporator to feed the refrigerant sucked from the refrigeration circuit into the motor chamber 26.

The rotary shaft 30 is driven by energization to an electric motor (motor) 40. Specifically, the electric motor 40 is a brushless type motor disposed in the motor chamber 26, and comprises a permanent magnet of a rare earth, such as a neodium magnet, a rotor 42 fixed to the outer periphery side of the rotary shaft 30, and a stator 44 which has an armature winding 43 arranged on the outer periphery side of the rotor 42.

The electric motor 40 of the embodiment is a three phase synchronous motor, and power is supplied to the armature winding 43 for each phase as will be described later. As the armature winding 43 is energized, the rotor 42 rotates together with the rotation of the magnetic field generated by the armature winding 43.

On the other hand, a scroll unit (compressing unit) 52 is accommodated in the compression casing 24, and the scroll unit 52 has a movable scroll 54 and a fixed scroll 56. The movable scrolls 54 and the fixed scroll 56 respectively have spiral laps 61 and 79 which engage with each other, and these spiral laps 61 and 79 cooperate together to form a compression chamber 58. The revolving motion of the movable scroll 54 causes the compression chamber 58 to move toward the center from the radial-directional outer periphery side of the spiral laps 61, 79, thus reducing the volume.

To achieve the revolving motion of the movable scroll 54, an end plate 60 of the movable scroll 54 has a boss 62 which projects toward the drive casing 22, and the boss 62 rotatably supports an eccentric bushing 66 via a needle bearing 64. The eccentric bushing 66 is supported by a crankpin 68, which protrudes eccentrically from the large-diameter shaft part 34. This causes the movable scroll 54 to revolve via the crankpin 68 and the eccentric bushing 66 with the rotation of the rotary shaft 30.

A counter weight 70 is attached to the eccentric bushing 66 between the eccentric bushing 66 and the large-diameter shaft part 34 via a connecting pin 71, and is used as a balance weight at the time the movable scroll 54 makes a revolving motion.

On the other hand, the fixed scroll 56 is fixed to the bottomed portion of the compression casing 24 via a bolt 57, and an end plate 78 of the fixed scroll 56 partitions the interior of the compression casing 24 into the compression chamber 58 and a discharge chamber 80. A discharge hole 82 which communicates with the compression chamber 58 is formed in the center of the end plate 78, and the discharge hole 82 is opened and closed by a reed valve 84. The reed valve 84 is attached together with its valve guard 86 to the discharge chamber 80 side of the end plate 78.

Further, an outlet 87 which communicates with the discharge chamber 80 is formed in the bottomed portion of the compression casing 24, and the discharge chamber 80 is connected to the aforementioned gas cooler via the outlet 87, thereby discharging the compressed refrigerant into the refrigeration circuit.

By the way, in the compressor 4 of the present embodiment, a seal member 100 is sandwiched and supported at an end wall 23a of the cup-shaped rear casing 23 by a bolt 102 (energization bolt).

The seal member 100 is structured to include an inner block 104, an outer block 106, and an insulating collar (intermediate block) 114 which are made of a resin. The inner block 104 abuts on an inner end face 23b of the end wall 23a of the rear casing 23, and extends toward the inside of the rear casing 23, i.e., the inside of the motor chamber.

On the other hand, the outer block 106 abuts on an outer end face 23c of the end wall 23a of the rear casing 23, is provided extending outside the rear casing 23, and is attached facing the inner block 104 with the end wall 23a inbetween.
The insulating collar 114 is inserted between these inner blocks 104 and outer block 106, and is surrounded by the blocks 104,106.

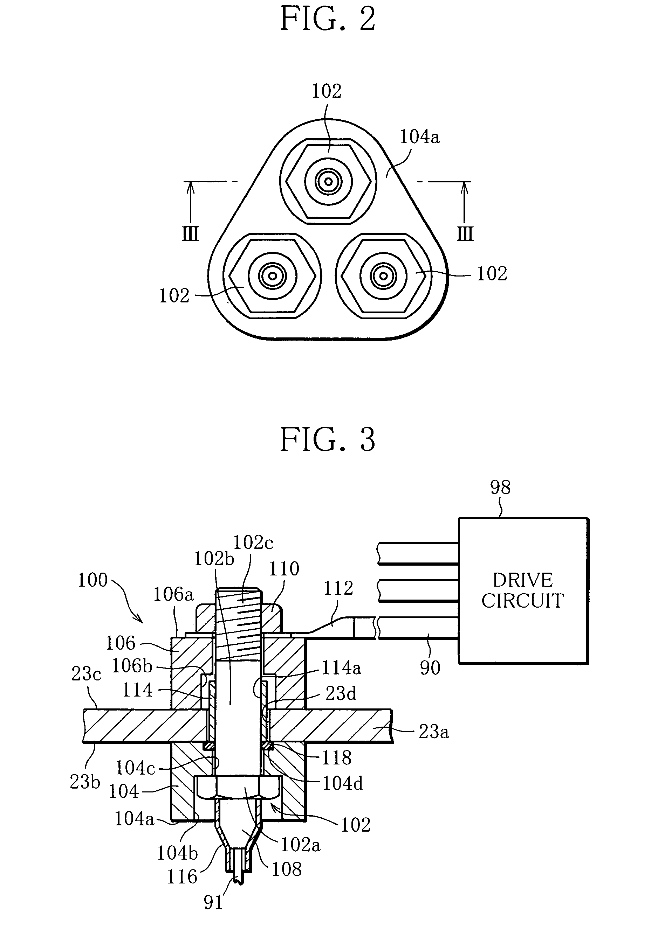

As shown in Fig. 2, as the seal member 100 is seen from the motor chamber 26 side, an inner end face 104a of the inner block 104 has an approximately triangular shape in a planar view, and surrounds each bolt 102 to be inserted toward the outer block 106. The individual bolts 102 are disposed adjacent to one another in such a way that the distance between the axes of the two adjacent bolts 102 approaches the diagonal line length of the hexagonal shape of the head portion of the remaining bolt 102.

In detail, as shown in Fig. 3, the bolt 102 penetrates through holes 104b, 106b and 114a formed in the inner and outer blocks 104, 106, and the insulating collar 114, and is inserted in an insertion hole bored in the end wall 23a of the rear casing 23. The individual through holes 104b, 106b, 114a and the individual insertion holes 23d are provided in correspondence to the three bolts.

The bolt 102 has an input portion 102a, an intermediate portion 102b, and an output portion 102c in order from the motor chamber 26 side. The input portion 102a is the head portion of the bolt 102 and is connected with an input terminal member 108 to which one end of a lead wire 91 is connected.

The intermediate portion 102b contiguous to the input portion 102a is a portion which does not have the thread part of the bolt 102, and its part is positioned in the insertion hole 23d. The insulation distances between the intermediate portion 102b or the bolt 102 and the inner end face 23b and the outer end face 23c of the rear casing 23 are set to the bus line lengths of the inner and outer blocks 104, 106, respectively.

The insulating collar 114 has an approximately triangular shape in a planar view which is approximately similar to the shapes of the inner and outer blocks 104, 106, and is inserted between the insertion hole 23d and the intermediate portion 102b, and the bus line length is set as the insulation distance between the insertion hole 23d of the rear casing 23 and the bolt 102. In this way, the intermediate portion 102b of the bolt 102 is surrounded by the seal member 100.

The output portion 102c contiguous to the intermediate portion 102b is positioned at the thread part of the bolt 102 where the nut 110 is screwed in the bolt 102. Accordingly, an output terminal member 112 is fastened to the outer end face 106a of the outer block 106, and at the same time, the inner and outer blocks 104, 106 are fixed to the rear casing 23. Finally, the output terminal member 112 is connected to one end of a lead wire 90, thus forming a power supplying circuit.

In this manner, power is supplied to the armature winding 43 through the lead wire 90, the output terminal member 112, the bolt 102, the input terminal member 108, and the lead wire 91 sequentially from the drive circuit 98 positioned outside the compressor 4, and the seal member 100 is sandwiched and supported by the input and output portions 102a and 102c of the bolt 102, and is fastened to the rear casing 23.

Procedures of attaching the seal member 100 to the rear casing 23 will be described below. First, with the bolt 102 inserted in the through hole 104c of the inner block 104 beforehand, the bolt 102 is inserted in the insertion hole 23d of the rear casing 23. At this time, the inner block 104 and each bolt 102 are united to become a unit.

Next, the insulating collar 114 is fitted over each bolt 102 projecting out of the rear casing 23 from the insertion hole 23d. The through hole 114a of the insulating collar 114 is fitted over the bolt 102 in such a way that the insulating collar 114 is inserted in the gap between the intermediate portion 102b and insertion hole 23d.

Next, the outer block 106 is attached with the through hole 106b being fitted over each bolt 102 from above, and after the output terminal member 112 is fitted in the output portion 102c, the nut 110 is screwed on the bolt 102 to fasten the seal member 100 to the end wall 23a of the rear casing 23, thereby completing the attachment of the seal member 100. The input terminal member 108 and the output terminal member 112 may be formed integral with the bolt 102.

An insulation process is performed on the wire connecting portion from the lead wire 90 to the armature winding 43 through the lead wire 91, and particularly, the lead wire 91 and the armature winding 43 are coated with enamel or the like. Further, the entire input terminal member 108 and the connecting portion of the input terminal member 108 with the lead terminal 91 are covered with an insulating tube 116, and the insulating tube 116 is formed of a heat-shrinkable material, and is engaged with at least one of the input terminal member 108 and the lead wire 91, though not illustrated clearly.

A diameter-reduced portion 104c which has a slight gap to the intermediate portion 102b is formed in the through hole 104b of the inner block 104, a groove 104d which is an annular cutaway of the abutment surface of the rear casing 23 to the inner end face 23b is formed at the diameter-reduced portion 104c, and an O ring (elastic member) 118 is fitted in the groove 104d.

The O ring 118 abuts on the inner end face 23b and the intermediate portion 102b, and seals between the inner end face 23b side and the outer end face 23c side, i.e., between the inside and outside of the rear casing 23, and between the inside of the rear casing 23 and the diameter-reduced portion 104c. In other words, the through hole 104b is airtightly blocked from the rear casing 23 in both the axial and radial directions of the bolt 102. This O ring is provided for each bolt 102.

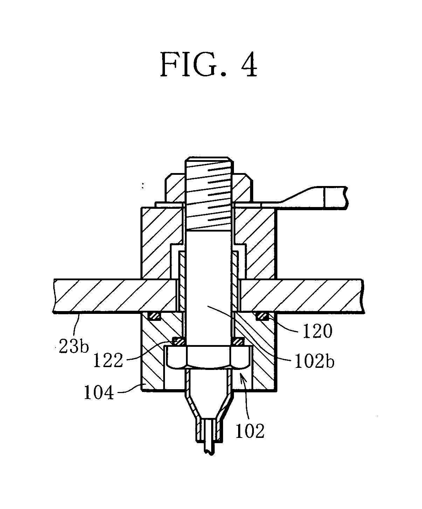

As shown in Fig. 4, two O rings, namely an O ring 120 (elastic member) which abuts on the inner end face 23b and an O ring 122 (elastic member) which abuts on the intermediate portion 102b, may be provided. The O ring 122 may abut on the head portion of the bolt 102 as shown in the diagram, as long as it abuts on the intermediate portion 102b.

In the compressor 4 configured in the above manner, when the electric motor 40 is driven by the power supplied from the drive circuit 98 to rotate the rotary shaft 30, the movable scroll 54 rotates about the axial center of the fixed scroll 56 via the eccentric bushing 66. At this time, the rotation of the movable scroll 54 is prevented by the work of a plurality of rotation block mechanisms 50. As a result, the movable scroll 54 makes a revolving motion to the fixed scroll 56 while keeping the revolving state steady, and the revolving motion sucks the refrigerant into the compression chamber 58 from the motor chamber 26 through the suction inlet 25, compresses the sucked refrigerant, and discharges the compressed refrigerant into the discharge chamber 80.

The refrigerant in a high-temperature, high-pressure state, discharged from the discharge chamber 80 passes through the outlet 87 to be cooled within the gas cooler, is supplied to the expansion valve where it is expanded by the restriction action, and is ejected into the evaporator, so that the air around the evaporator is cooled by the evaporation heat of the refrigerant. The cooled air is sent into the compartment of the vehicle to cool the interior of a chamber, and air conditioning of the car interior of the compartment is performed. The refrigerant in the evaporator returns to the suction inlet 25 of the compressor 4, and is then compressed again by the compressor 4 to be circulated as described above.

According to the embodiment, as described above, the bolt 102 is inserted in the insertion hole 23d bored in the end wall 23a of the rear casing 23, and the seal member 100 or the inner and outer blocks 104, 106 are fastened to the end wall 23a only with the bolts 102. Therefore, the bolt 102 serves to both supply the power from the drive circuit 98 to the electric motor 40, and fix the seal member 100, thus eliminating the need for separate provision of the portion where the seal member 100 is to be fixed to the end wall 23a. It is therefore possible to reduce the number of parts of the compressor 4, facilitating the attachment work thereof, which can reduce the manufacturing cost of the compressor 4.

What is more, the occupation area of the sealed terminal becomes smaller to ensure reduction of the space in the rear casing 23, making it possible to promote the miniaturization of the compressor 4.

In addition, the inner and outer blocks 104, 106, and the insulating collar 114 are formed to have an approximately triangular shape in a planar view, and three bolts 102 are disposed adjacent to one another. This can promote space reduction in the rear casing 23 and further the miniaturization of the compressor 4.

The seal member 100 is structured to include the inner and outer blocks 104, 106 whose bus line lengths are set to the insulation distance, and these blocks 104, 106 respectively have the through holes 104b, 106b which respectively abut on the inner end face 23b and the outer end face 23c of the end wall 23a of the rear casing 23 and through which the bolt 102 penetrates.

The insulating collar 114 whose bus line length is set to be the insulation distance is inserted between the insertion hole 23d of the bolt 102, and the intermediate portion 102b of the bolt 102. Therefore, it is possible to surely insulate the bolt 102, the inside and outside of the rear casing 23, and the insertion hole 23d of the rear casing 23, so that the insulation performance of the compressor 4 can be improved significantly.

Here, the connecting portion of the input terminal member 108 and the lead wire 91 is the charging portion of the electric motor 40, which is particularly likely to reduce the insulation performance. While the connecting portion is subjected to an insulation process beforehand as described above, coverage with the insulating tube 116 in addition can surely prevent exposure of the connecting portion, thus making it possible to improve the reliability in the insulation performance of the compressor 4.

Since the insulating tube 116 is a heat-shrinkable tube, it certainly fits to the input terminal member 108 and the aforementioned connecting portion and is engaged with either one of the input terminal member 108 or the lead wire 91, it is possible to prevent the insulating tube 116 from coming off due to the vibration of the compressor 4 and other disturbances, and stably secure the insulation performance of the compressor 4.

On the other hand, in attaching the seal member 100 to the rear casing 23, the bolt 102 is inserted into the through hole 104b of the inner block 104 beforehand to become a unit, and this unit is inserted in the insertion hole 23d of the rear casing 23. Then, the through holes 114a and 106b of the insulating collar 114 which is another unit, and the outer block 106 are sequentially aligned with the bolt 102 projecting from the insertion hole 23d, and are fitted thereover. Further, after the units are attached to the rear casing 23, the nut 110 is screwed onto the bolt 102 from the outside of the rear casing 23 to fasten them.

As apparent from the above, promotion of the unitization of the parts at the time of attachment can reduce the number of the seal members 100 and eventually the number of parts of the compressor 4 even when there are a plurality of bolts 102 as in the present embodiment, making it possible to prevent the lack of the parts at the time of attachment.

Since attachment of the inner and outer blocks 104, 106, and the insulating collar 114 to the rear casing 23 can be completed in one attachment process each, it is possible to reduce the number of attachment steps for the compressor 4 and further improve the attachment. It is preferable that the input terminal member 108 and the output terminal member 112 should be formed integral with the bolt 102, making it possible to further reduce the number of the parts of the compressor 4 and further improve the attachment.

On the other hand, the O ring 122 which seals the through hole 104b and the inside of the rear casing 23 is disposed between the through hole 104b of the inner block 104, and the intermediate portion 102b of the bolt 102. Therefore, the refrigerant and oil atmosphere in the rear casing are prevented from being leaked outside the rear casing 23 through the through hole 104b and the insertion hole 23d in the axial direction of the bolt 102, making it possible to improve the sealing performance of the compressor 4.

The O ring 120 is disposed between the inner block 104 and the inner end face 23b of the rear casing 23 to seal the insertion hole 23d and the inside of the rear casing 23. Therefore, the refrigerant and oil atmosphere in the rear casing 23 are prevented from being leaked outside the rear casing 23 through the insertion hole 23d in the radial direction of the bolt 102, making it possible to further improve the sealing performance of the compressor 4.

It is preferable that as shown in Fig. 3, the groove 104d should be formed at the position where both the through hole 104b of the inner block 104, and the insertion hole 23d can be sealed simultaneously, and the O ring 118 is disposed there, making it possible to enable sealing in both the axial direction and radial direction of the bolt 102 with a single O ring. This can further reduce the number of the parts of the compressor 4 and improve the attachment nature thereof.

Further, the provision of such O rings 118, 120, 122 can make the fastening force of the nut 110 to the bolt 102 relatively smaller in addition to the improvement of the sealing performance, making it possible to use bolts of inexpensive materials which reduce the strength of the bolt 102. This brings about an effect of reducing the manufacturing cost of the compressor 4.

Although the description of one embodiment of the present invention is finished above, the invention is not limited to the embodiment, and can be modified in various forms within the scope of the invention.
For example, in the foregoing embodiment, besides the O ring 108, the two O rings 120, 122 may be attached as shown in Fig. 4, but in case of attaching only one of the O rings 120, 122, the sealing performance in at least one of the axial direction and radial direction of the bolt 102 can be improved.

The O ring 120 may be provided so as to surround the three bolts 104 for each inner block 104, not for each bolt 102, in which case the number of the O rings 120 can be reduced and the attachment of an O ring to the rear casing 23 can also be improved. Further, the O ring 122 should abut on the intermediate portion 102b, and the same effect is acquired even if the O ring 122 is provided to abut on the head section of the bolt 104 as illustrated in the same diagram.

Furthermore, a gasket may be used in place of the O ring 118, 120, 122. In this case, since fastening force of the nut 110 to the bolt 102 can be made greater, making it possible to prevent unnecessary rattling of the individual constituting parts, and further improve the reliability of the compressor 4.

Moreover, although the insulating collar 114 is shown as one member in the foregoing embodiment, it may be formed integral with either one of the inner block 104 and the outer block 106, in which case it is possible to further reduce the number of the parts of the compressor 4 and further improve the attachment nature thereof.

The inner and outer blocks 104, 106, and insulating collar 114 are made of a resin to contribute to the weight reduction of the compressor 4 in the foregoing embodiment, but those materials have only to have the insulating property, and may be, for example, ceramics. In case where they are made of ceramics, it is hard to cause time-dependent degradation as compared with the case where they are made of a resin, making it possible to continuously keep the fastening force of the bolt 102 and the nut 110 with respect to the inner and outer blocks 104, 106, and continuously secure the insulation performance of the insulating collar 114, so that the reliability of the compressor 4 can be improved further.

Although the electric motor 40 of the embodiment is a three-phase motor, it is not necessarily limited to this type, and the embodiment can be adapted to, for example, a single-phase motor or a two-phase motor, and the seal member and eventually the compressor 4 can be made compact by providing the bolts 102 for the number of the phases, and providing the through holes 104b, 106b corresponding in number to the bolts 102 in the inner and outer blocks 104, 106, respectively. Depending on the motor output, two or more bolts 102 may be provided for each phase.

Finally, although the foregoing description of the embodiment has been given of a scroll type motor-driven compressor, the compressing unit of the invention can be adapted to either the scroll type or piston reciprocation type, and the refrigerant used in the refrigeration circuit may also be a chlorofluorocarbon substitute as well as a CO₂ refrigerant. In these cases, it is possible to easily and surely improve the insulation performance and the sealing performance of the compressor.

## Claims

1. A motor-driven compressor comprising:
a housing which is a sealed container;
a machine chamber formed in the housing, and provided with a motor whose rotary shaft rotatably supported is driven by power supply from an external drive circuit; a compressing unit which is accommodated in the housing, and is driven by the rotary shaft to perform a series of processes of suction, compression and discharge of a refrigerant;
an energization bolt which includes an input portion to be connected to the motor, an intermediate portion contiguous to the input portion and positioned in an insertion hole formed in the housing, and an output portion contiguous to the intermediate portion and to be connected to the drive circuit, and energizes between the drive circuit and the motor; and
a seal member which surrounds the intermediate portion, is sandwiched and supported by the input portion side and the output portion side, and is fastened to the housing.

2. The motor-driven compressor according to claim 1, wherein the seal member includes an inner block which abuts on an inner end face of the housing, extends towards inside the housing and has an insulation property, and an outer block which abuts on an outer end face of the housing, extends towards outside the housing and has an insulation property, each of the blocks having a through hole formed therein to permit insertion of the energization bolt.

3. The motor-driven compressor according to claim 2, wherein the seal member further includes an intermediate block with an insulation property, which is surrounded by the inner block and the outer block, is positioned between the insertion hole and the intermediate portion, and has a through hole formed therein to permit insertion of the energization bolt.

4. The motor-driven compressor according to claim 2 or 3, wherein an elastic member which seals the through hole and inside the housing is disposed between the through hole of the inner block, and the intermediate portion.

5. The motor-driven compressor according to any one of claims 2 to 4, wherein an elastic member which seals the through hole and inside the housing is disposed between the inner block and the inner end face of the housing.

6. The motor-driven compressor according to any one of claims 1 to 5, wherein one or a plurality of energization bolts are provided for each phase of the motor, and in case of the plurality of energization bolts in total, the individual energization bolts are disposed adjacent to one another.
